# DEMANDE DE BREVET EUROPEEN

(11) **EP 4 675 237 A1**
(43) Date de publication de la demande: **07.01.2026**
(21) Numéro de dépôt: 25187326.1
(22) Date de dépôt: 03.07.2025
(51) Int. Cl.: G01F 1/20, F25D 17/00, F25D 13/06

(54) **SYSTÈME DE VÉRIFICATION DU FONCTIONNEMENT DES EXTRACTIONS D'ÉQUIPEMENTS CRYOGÉNIQUES**

(30) Priorité: 03.07.2024 FR 2407252
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: POIRIER, Alban, 92220 Bagneux (FR); PICHOU, Michel, 35690 Acigne (FR); PINILLOS, Joseluis, 41500 Alcala de Guadaira Sevilla (ES); EMANUELLI, Marco, 20152 Milan (IT)
(74) Mandataire: Air Liquide

(57) **Abrégé**

Un procédé de gestion de l'opération d'une installation de refroidissement ou surgélation cryogénique de produits, installation comprenant un équipement cryogénique de refroidissement tel qu'un tunnel cryogénique, un mélangeur, ou encore un équipement de découpe ou hachage dit « cutter », équipement qui est équipé de moyens d'extraction des gaz froids se formant dans l'équipement du fait de la vaporisation du cryogène mis en œuvre pour le refroidissement, et où les moyens d'extraction comprennent au moins une canalisation d'évacuation munie d'une extrémité débouchant à l'extérieur des locaux abritant l'équipement, se caractérisant en ce que l'on positionne à l'extrémité extérieure de la ou de chacune ou d'au moins une desdites canalisations d'évacuation, une pièce que l'on peut qualifier de « clapet », qui est mobile, et qui est apte à fermer la canalisation considérée quand l'équipement n'est pas en phase de production et en ce que l'on mesure le débit de gaz extrait par la canalisation considérée, afin d'être en mesure de détecter une éventuelle obstruction de cette canalisation considérée, ceci en procédant à une mesure de l'angle d'ouverture du clapet équipant la canalisation considérée .

## Description

La présente invention s'intéresse au domaine des hottes d'extraction équipant les tunnels de surgélation, mais plus généralement équipant tous les équipements cryogéniques munis d'une ou plusieurs extractions forcées vers l'extérieur du bâtiment accueillant ces équipements, tels les mélangeurs (on dit aussi « malaxeurs »), de viandes etc..., et autres « cutters » (équipement de découpe et de hachage).

A titre illustratif, les tunnels de surgélation sont munis le plus souvent de deux hottes d'extraction des gaz froids par le haut du local abritant les tunnels : une à l'entrée du tunnel et une à la sortie du tunnel, qui servent à gérer l'évacuation, hors du local, des gaz issus de la vaporisation des fluides cryogéniques mis en en œuvre dans le tunnel (le plus souvent de l'azote ou du CO₂). Ce système d'extraction a donc pour rôle d'évacuer les gaz formés dans l'appareil et ainsi d'assurer la sécurité des opérateurs en les protégeant de tout risque d'anoxie, tout en conservant la productivité des tunnels.

On sait notamment que l'on observe couramment le fait que, lié à la très basse température des gaz extraits et à la présence d'humidité, de la glace peut se former dans les canalisations d'extraction, entrainant une réduction de l'extraction, même si la vitesse de l'extraction elle-même a été maintenue constante.

Il faut noter que si le plus souvent les tunnels sont munis de deux hottes d'aspiration, il arrive que des tunnels soient équipés d'une seule hotte, ou encore que des tunnels opèrent avec une seule de leur deux hottes en fonctionnement, le plus souvent celle située en entrée, ou encore avec deux hottes reliées entre elles.

Le débit d'extraction de chacune de ces hottes doit être correctement réglé afin d'aspirer la juste quantité de gaz i.e suffisamment pour éviter l'épandage des gaz hors du tunnel et la mise en danger des opérateurs, mais sans excès d'aspiration pour ne pas aspirer vers l'extérieur les gaz froids du tunnel et entraîner alors une surconsommation de fluide cryogénique.

De façon générale, on commence par chercher à confiner les fluides au milieu le tunnel au moyen de rideaux ou déflecteurs, on équilibre ensuite les gaz froids dans le tunnel au moyen de déflecteurs ou de ventilateurs dits « pousseurs », puis on règle le débit d'extraction.

Actuellement, si l'on note qu'il y a épandage de gaz vers l'extérieur au niveau des parties ouvertes du tunnel, à l'entrée et/ou à la sortie, on augmente le débit d'aspiration.

On comprend donc qu'il y a un enjeu crucial dans la capacité de maitriser les performances d'extraction sur de tels équipements cryogéniques, non seulement pour des raisons de sécurité (risque d'anoxie du personnel), mais plus largement pour éviter les rétro-pollutions de l'extérieur qui pourraient intervenir lors d'arrêts, ou encore pour maintenir une surpression dans l'atelier pour des raisons d'hygiène, et pour éviter les entrées de chaleur dans l'équipement, qui entraineraient des surconsommation de cryogène.

Bien entendu ce domaine technique connait déjà certaines solutions, parmi lesquelles on peut citer :
- La présence d'un capteur de dépression fixé dans la gaine d'extraction, capteur qui permet de valider l'aspiration correcte de l'extracteur. La fiabilité de ce type de capteur pour ce type d'application repose sur l'ambiance dans la gaine d'extraction: ambiance humide, froide et potentiellement avec des envols de portions de produits surgelés. Ces capteurs sont au fur et à mesure du temps bloqués par du givre ou des dépôts de produit, les rendant inutilisables.
- fil chaud (mesure de résistance chauffante qui maintient une température, en fonction de la puissance envoyée au fil chaud pour maintenir la température et l'on en déduit un débit d'air aspiré). Les mêmes inconvénients que précédemment peuvent être mentionnés ici.

Comme on le verra plus en détails dans ce qui suit, afin de répondre à ces préoccupations, la présente invention s'attache, elle, à connaitre en temps réel l'information indiquant que la ou les extractions fonctionnent correctement ou non, afin d'être en mesure de prendre ou non les mesures d'urgence, qui sont adaptées.

La solution technique proposée dans le cadre de la présente invention est simple, fiable, et de faible cout.

Elle peut être résumée ainsi :
- On positionne à l'extrémité (extérieure) de la ou de chacune ou d'au moins une des extractions ou canalisations d'extraction dont est muni l'équipement, une pièce que l'on peut qualifier de « clapet », qui est mobile, apte à fermer la canalisation d'extraction (quand l'équipement n'est pas en production on le comprend) ;
- L'objectif de la présente invention est de mesurer le débit de gaz extraits par la canalisation considérée, afin d'être en mesure de détecter une éventuelle obstruction qui entraînerait notamment des risques de fuite de gaz vers l'intérieur de la pièce environnant l'équipement ;
- Pour cela, par une mesure de l'angle d'ouverture du clapet et en fonction du diamètre de la canalisation d'extraction, on déduit un débit des gaz évacués et l'on peut donc être en mesure de détecter une chute de débit ;
- On a procédé au préalable, par l'expérience, à l'établissement d'un tableau (ou courbe) de débits mesurés pour différents taux d'ouverture du clapet, en tenant compte du diamètre de la canalisation, par exemple via des mesures de vitesses effectuées à l'aide d'un anémomètre .

Les mesures d'angles d'ouvertures peuvent être réalisées par tout type de capteurs connus de l'homme du métier.

On peut noter que durant les périodes d'arrêts de production il est très intéressant de fermer le clapet, ce qui est avantageux pour réduire les entrées d'air dans la pièce qui contient l'équipement et pour limiter les phénomènes de « rétro-pollution ».

L'extrémité extérieure de la ou de chacune ou d'au moins une des canalisations d'extraction s'entend d'une extrémité qui débouche directement dans l'air libre.

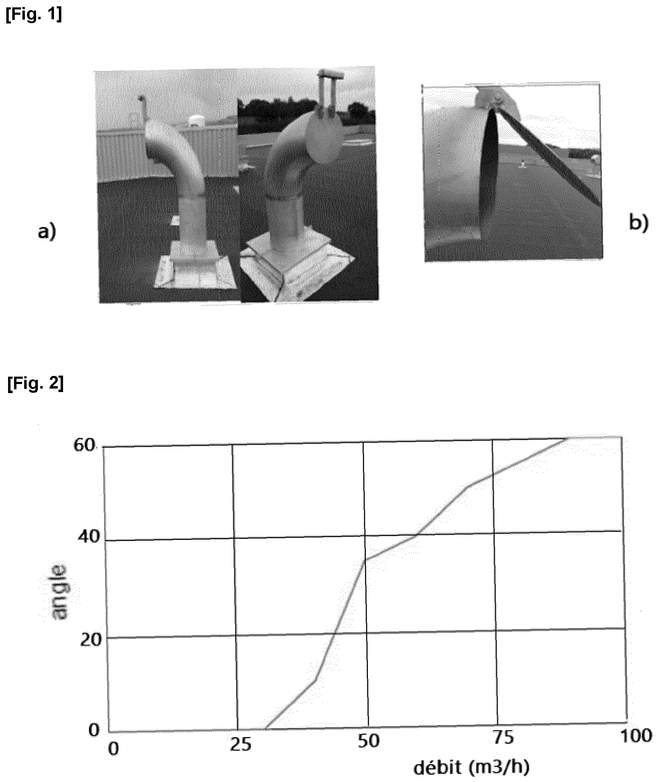

La [Figure 1] annexée illustre par deux vues schématiques partielles un exemple d'installation conforme à l'invention, positionnée sur le toit des locaux abritant un tunnel de surgélation, toit par lequel débouche l'extraction du tunnel, vues a) et b) qui permettent de visualiser le clapet, respectivement en position fermée et ouverte.

La [Figure 2] annexée illustre un exemple de détermination expérimentale d'un tableau (et courbe) de débits mesurés pour différents taux d'ouverture du clapet, en tenant compte du diamètre de la canalisation considérée.

## Revendications

1. Procédé de gestion de l'opération d'une installation de refroidissement ou surgélation cryogénique de produits, installation comprenant un équipement cryogénique de refroidissement tel qu'un tunnel cryogénique, un mélangeur, ou encore un équipement de découpe ou hachage dit « cutter », équipement qui est équipé de moyens d'extraction des gaz froids se formant dans l'équipement du fait de la vaporisation du cryogène mis en œuvre pour le refroidissement, et où les moyens d'extraction comprennent au moins une canalisation d'évacuation munie d'une extrémité débouchant à l'extérieur des locaux abritant l'équipement, **se caractérisant par** la mise en œuvre des mesures suivantes :
- On positionne à l'extrémité extérieure de la ou de chacune ou d'au moins une desdites canalisations d'évacuation, une pièce que l'on peut qualifier de « clapet », qui est mobile, et qui est apte à fermer la canalisation considérée quand l'équipement n'est pas en phase de production ;
- On mesure le débit de gaz extrait par la canalisation considérée, afin d'être en mesure de détecter une éventuelle obstruction de cette canalisation considérée, ceci en procédant à une mesure de l'angle d'ouverture du clapet équipant la canalisation considérée ;
- On a procédé au préalable, par la voie expérimentale, à l'établissement d'un tableau de débits mesurés pour différents taux d'ouverture du clapet, en tenant compte du diamètre de la canalisation considérée ;
- On détermine ledit débit de gaz extrait à partir de ladite mesure d'angle d'ouverture à l'aide dudit tableau ;
- On procède le cas échéant à un lancement d'alerte selon la valeur dudit débit de gaz et son positionnement par rapport à une valeur de consigne, pour signaler le cas échéant une anomalie et
par exemple pour demander une maintenance de l'équipement.
